(19) **Europäisches Patentamt European Patent Office Office européen des brevets**

(11) **EP 1 005 392 B1**

(12) **FASCICULE DE BREVET EUROPEEN**

(45) Date de publication et mention
de la délivrance du brevet:
**07.03.2007 Bulletin 2007/10**

(51) Int Cl.:
***B01J 19/00*** *(2006.01)* ***B01J 8/00*** *(2006.01)*
***B01D 53/85*** *(2006.01)* ***C12M 1/40*** *(2006.01)*

(21) Numéro de dépôt: **98939724.5**

(22) Date de dépôt: **20.07.1998**

(86) Numéro de dépôt international:
**PCT/FR1998/001592**

(87) Numéro de publication internationale:
**WO 1999/004894 (04.02.1999 Gazette 1999/05)**

(54) **PROCEDE REACTIONNEL EN CONTINU PAR CATALYSE SOLIDE/GAZ EN MILIEU NON CONVENTIONNEL, REACTEUR CORRESPONDANT ET UTILISATION DE CE REACTEUR**

KONTINUERLICHES KATALYTISCHES FESTSTOFF/GAS-REAKTIONSVERFAHREN IN NICHT-KONVENTIONNELLEM MILIEU, IHREM REAKTOR SOWIE VERWENDUNG DESSEM

CONTINUOUS REACTION METHOD BY SOLID/GAS CATALYSIS IN UNCONVENTIONAL MEDIUM, CORRESPONDING REACTOR AND USE OF SAID REACTOR

(84) Etats contractants désignés:
**AT BE CH CY DE DK ES FI FR GB GR IE IT LI LU MC NL PT SE**

(30) Priorité: **22.07.1997 FR 9709298**

(43) Date de publication de la demande:
**07.06.2000 Bulletin 2000/23**

(73) Titulaire: **Université de la Rochelle
17042 La Rochelle Cedex 1 (FR)**

(72) Inventeurs:
• **LAMARE, Sylvain
F-17000 La Rochelle (FR)**
• **LEGOY, Marie-Dominique
F-17180 Perigny (FR)**

(74) Mandataire: **Desaix, Anne et al
Ernest Gutmann - Yves Plasseraud S.A.S.
3, rue Auber
75009 Paris (FR)**

(56) Documents cités:
**WO-A-90/10696**

• **ALAN J. RUSSEL & FANG XIAO YANG: "Catalyze gas-phase reactions with enzymes" CHEMTECH, vol. 26, no. 10, octobre 1996, pages 24-27, XP002062593 WASHINGTON, DC,US**
• **SYLVAIN LEMARE & MARIE-DOMINIQUE LEGOY: "Working at Controlled Water Activity in a Continuous Process: The Gas/Solid System as a Solution" BIOTECHNOLOGY AND BIOENGINEERING, vol. 45, no. 5, 5 mars 1995, pages 387-397, XP002062594 NEW YORK US cité dans la demande**
• **BART DE HEYDER ET AL.: "Ethene Removal from a Synthetic Waste Gas Using a Dry Biobed" BIOTECHNOLOGY AND BIOENGINEERING, vol. 44, no. 5, 20 août 1994, pages 642-648, XP000444315 NEW YORK, US**

Remarques:
Le dossier contient des informations techniques présentées postérieurement au dépôt de la demande et ne figurant pas dans le présent fascicule.

**Description**

La présente invention concerne le fonctionnement de réacteurs en continu en milieu non conventionnel, c'est-à-dire non aqueux, en particulier pour des réactions de catalyse mettant en jeu essentiellement une phase solide et une phase gazeuse.

Des réactions catalytiques solide/gaz dans laquelle la phase solide du réacteur est constituée par une enzyme et les substrats ou les produits de la réaction se trouvent sous forme gazeuse ont été décrites par Pulvin S., Legoy M.D., Lortie R., Pensa M. et Thomas D. (1986) Enzyme technology and gas phase catalysis: alcohol dehydrogenase example. Biotechnol. Lett., 8, 11, pp 783-784. Des systèmes de catalyse qui mettent en oeuvre des cellules entières en tant qu'éléments constituants de la phase solide du réacteur sont également connus.

La catalyse solide/gaz présente en fait des avantages certains par rapport aux systèmes conventionnels de type solide/liquide:

- elle permet, dans le réacteur, de s'affranchir de l'utilisation de solvants et d'opérer uniquement avec les substrats et les produits de la réaction dans l'environnement proche de l'enzyme;
- la phase solide étant composée par l'élément biocatalyseur lui même, les étapes de fixation ou d'immobilisation ne s'avèrent pas nécessaires.
- les transferts de masse étant importants en raison de la diffusivité élevée et de la faible viscosité des phases gazeuses, la productivité est améliorée.
- la phase gazeuse est composée de substrats et de produits purs et d'un gaz vecteur, aucun solvant n'est utilisé, ce qui facilite le traitement en aval du milieu réactionnel.

La catalyse solide/gaz demande une température de travail plus importante que les systèmes conventionnels. De ce fait les risques de contamination microbienne des éléments des réacteurs sont moindres.

Le principe en est le suivant :

La transformation de substrat gazeux véhiculé le cas échéant par un gaz vecteur, subit une transformation à l'interface d'un biocatalyseur solide (enzyme ou cellules entières), les produits de la réaction étant récupérés sous forme gazeuse.

Les principes de la catalyse solide/gaz, les paramètres des réactions en cause sont décrits dans Biotechnology and Bioengineering, Vol. 45, pages 387-397 (1995).

A ce jour, seuls quelques composés chimiques ont pu être obtenus, tels que les époxydes et les aldéhydes et esters par des systèmes de catalyse solide/gaz (ref). Mais la limite principale du système existant est le maintien d'un biocatalyseur actif et donc la compatibilité avec une utilisation industrielle.

Une application prometteuse pour les réacteurs de ce type concerne le traitement des effluents gazeux pollués, le champ des molécules qui doivent être éliminées des déchets industriels avant leur relargage dans l'atmosphère ne cessant de s'accroître. Il s'agit d'aldéhydes, alcools, cétones, acides carboxyliques, crésols, phénols, dérivés soufrés, amines cycliques, alcanes ou esters. Une amélioration des techniques de dépollution des sols peut également être réalisée par de tels systèmes.

Cependant, les systèmes de catalyse solide/gaz sont d'abord liés par la multiplicité des éléments constitutifs des réacteurs, conduisant à un manque de maîtrise des différents paramètres, en particulier de ceux dépendant du rôle complexe de l'eau. En effet l'état d'hydratation de la préparation enzymatique exerce un effet antagoniste sur l'activité catalytique et sur la stabilité dans le temps du catalyseur.

Les réacteurs en phase solide/gaz développés à ce jour (Lamare et al, Trends in Biotechnology (1993) 10 (117): 413-418) sont conçus pour opérer à la pression atmosphérique, bien qu'ils soient susceptibles de travailler à des températures allant jusqu'à 220°C avec une activité thermodynamique contrôlée pour chaque constituant, activité dont la définition et l'importance dans la réalisation de la réaction enzymatique solide/gaz est décrite ci-dessous.

Ils sont inopérants pour toutes les applications dans lesquels les composants sont peu volatiles, c'est-à-dire pour tous les composants dont le point d'ébullition se situe aux alentours de 150-250°C. Or aujourd'hui un grand nombre de réactions susceptibles d'être développées, car présentant un intérêt industriel, font intervenir des composés dont les pressions de saturation sont faibles voire proches de 0, aux températures de travail utilisées se situant entre 50 et 150°C, températures compatibles avec un maintien actif du biocatalyseur.

Le principal obstacle des systèmes existants est de faire passer en phase gazeuse tous les composants du système, substrats de réaction et produits obtenus. Aucun bioréacteur ne permet cette transformation. De plus, les coûts engendrés par l'utilisation massive d'un gaz vecteur neutre pour une alimentation importante d'un réacteur solide/gaz rendent prohibitive l'utilisation de cette technique de réaction à des fins industrielles.

De nombreux exemples témoignent du rôle important de l'eau sur la catalyse enzymatique en milieu non conventionnel. Une façon simple de définir l'activité thermodynamique de l'eau consiste à utiliser la pression de vapeur d'eau de la phase gazeuse en équilibre avec le système considéré. On peut alors écrire :

$$a_w = Pp/Ppref$$

où Pp est la pression partielle de l'eau au-dessus du système et Ppref la pression partielle, dite de référence, mesurée à la même température au-dessus d'eau pure. L'$a_w$ d'un système est donc tributaire de grandeurs physiques caractérisant un système telles que la pression absolue et la température ; il est le paramètre d'équilibre permettant de définir l'état de l'eau ; il permet dans un système de quantifier de façon non équivoque l'influence de l'eau, dans un système où la polarité, la constante diélectrique des espèces chimiques en présence, le nombre de phases, la température, ont une influence considérable sur la distribution de l'eau dans les différentes phases du système.

Halling (Halling P. (1984) dans Effect of water on equilibria catalysed by hydrolytic enzymes in biphasic reaction systems. Enzyme. Microb. Technol., 6, pp 513-515) a illustré l'équilibre pouvant exister entre les différents états de l'eau et les différentes phases d'un milieu complexe (état d'hydratation du biocatalyseur et des autres composants, quantité d'eau dissoute dans le solvant, pression partielle de vapeur d'eau au-dessus du système), cet équilibre étant fonction de l'activité de l'eau.

La valeur de l'activité thermodynamique de l'eau d'un système dépend des grandeurs physiques caractérisant ce système, telles que la pression absolue et la température. La valeur de l'activité thermodynamique de l'eau est donc réglée pour établir les conditions opératoires d'équilibre entre les différentes phases du réacteur ; il est donc un paramètre déterminant pour optimiser le réacteur et ses conditions de fonctionnement.

La présente invention propose de pallier les problèmes ci-dessus évoqués par la mise en oeuvre de réactions catalysées en phase solide/gaz à pression réduite, afin d'optimiser la productivité et de réduire les coûts en minimisant, voire en éliminant, l'utilisation d'un gaz vecteur neutre, en se référant aux activités thermodynamiques de l'eau et des composés utilisés.

Plus précisément, l'invention a pour objet un procédé réactionnel en continu par catalyse essentiellement gaz/solide en milieu non conventionnel, mettant en oeuvre différents substrats gazeux afin d'obtenir des produits déterminés. Ce procédé consiste à contrôler la température, déterminant la pression de saturation de référence de chaque composé pur, la pression totale du système, et les débits molaires des composés, pour régler la composition molaire du mélange gazeux en fonction des valeurs d'activité thermodynamique déterminées des composés. Les caracteristiques de procédé sont reprises dans le libellé de la revendication 1.

L'invention concerne également un réacteur comportant des moyens aptes à mettre en oeuvre ce procédé, tel que defini dans la revendication 2. Un tel réacteur comporte des pompes de contrôle des débits de chacun des substrats liquide, des débitmètres massiques pour l'adjonction d'un gaz vecteur et des sondes de contrôle en température d'un mélangeur d'expansion des substrats en phase gazeuse, d'une chambre de réaction comportant un bioréacteur contenant un catalyseur biologique et dans lequel les substrats sont introduits via un échangeur de chaleur, du bioréacteur et d'un échantillonneur d'analyse situé en sortie de la chambre de réaction. Une pompe à vide couplée à une valve de régulation du vide est montée également en sortie de la chambre de réaction. Les pompes, les sondes et la valve sont reliés à un contrôleur de commande couplé à un processeur de gestion. En fonction des données reçues et des algorithmes de gestion qu'il applique, le processeur transmet au cours du temps des signaux de commande aux différents organes (pompes, sondes et valve) afin de régler la température, la pression totale et les débits molaires en fonction des valeurs d'activité thermodynamique déterminées.

Par catalyseur biologique, on entend tout catalyseur constitué ou issu d'un organisme vivant animal, végétal, bactérien, viral ou fongique ; il peut s'agir d'une cellule entière, d'un organite cellulaire, d'un complexe macromoléculaire ou d'une molécule notamment des protéines, des acides nucléiques ou des mélanges de ceux-ci et présentant une activité catalytique.

Le procédé mis en oeuvre dans l'invention permet d'augmenter la productivité du système par rapport à un système fonctionnant à pression atmosphérique, de minimiser ou d'annuler la quantité de gaz vecteur utilisé, d'augmenter la richesse de la phase gazeuse en substrats sans avoir à augmenter la température de façon déraisonnable, tout en diminuant l'encombrement d'un réacteur à pression atmosphérique. Ces avantages peuvent coexister, leurs effets respectifs étant alors modulés.

La possibilité de s'affranchir du gaz vecteur est obtenue par remplacement de ce gaz par le composé en phase vapeur de point d'ébullition le plus bas des composés introduits ; l'activité thermodynamique de ce composé peut être bridée en fonction de la pression absolue Pa du système ; il remplit alors la fonction de gaz vecteur dans le procédé de l'invention.

Un autre avantage de l'invention réside dans l'amélioration de la stabilité du catalyseur biologique du fait que l'hydratation, dont dépend sa thermostabilité, est contrôlée.

Dans un mode de réalisation particulier, et afin d'éviter une modification constante de la composition de la phase gazeuse au cours du temps, le gaz à transformer au cours de la réaction résulte d'un mélange de plusieurs composés sous forme liquide suivi d'une vaporisation instantanée (« flash » liquide-vapeur) réalisée à haute température (par exemple 450°C), avec éventuellement l'adjonction d'un gaz vecteur neutre après vaporisation, si par exemple on ne souhaite pas brider l'activité termodynamique de l'eau.

Le réacteur selon l'invention permet de contrôler de façon précise le microenvironnement du biocatalyseur. Il est alors possible de faire fonctionner une enzyme et d'observer son comportement cinétique et sa solvatation/hydratation, et de valider la modélisation de certaines interactions, par exemple protéine/ligands.

Ce réacteur ouvre la voie à une nouvelle enzymologie industrielle où seule les disponibilités effectives des substrats et de l'eau pour l'enzyme, définies par leur activité thermodynamique, sont prises en compte, permettant de quantifier leur effet sur la catalyse au niveau moléculaire.

Le réacteur selon l'invention, ainsi que le procédé mis en oeuvre dans son fonctionnement présentent de nombreux avantages industriels détaillés ci-dessous et qui sont :

- de déterminer le prix de revient des composés obtenus,
- d'élargir la gamme des substrats et des produits utilisables, ainsi que l'éventail des réactions catalysables,
- d'utiliser des substrats présentant des points d'ébullition élevés,
- le contrôle des activités termodynamiques en permettant des modifications d'énergie libre de réaction, autorise l'utilisation d'un même catalyseur pour différentes réactions, comprenant par exemple l'hydrolyse, la transesterification et les synthèses pour les lipases (exemple 1 ci-après).

a) diminution du prix de revient

Le premier avantage se situe en terme de prix de revient des composés obtenus par leur mise en oeuvre pour les raisons suivantes : la diminution ou l'affranchissement en gaz vecteur simplifie la réalisation du réacteur, diminue les frais fixes de production.

b) augmentation de la productivité

Le substrat lui-même peut être son propre vecteur et ainsi permet d'augmenter sa concentration relative et conduit à augmenter de façon considérable la productivité de la réaction, c'est-à-dire augmenter la quantité des produits obtenus ; en effet, la pression totale est réduite au minimum afin d'augmenter d'autant le rapport $n/n_{tot}$ de chaque produit X, puisque la pression partielle de chaque composé est fixée par la valeur de l'activité thermodynamique de ce composé. Par exemple pour une transformation à 80°C d'un composé avec une pression partielle de référence de 0,5 atm à cette température et avec une activité thermodynamique de 0,1, la pression partielle en X dans le gaz à transformer est alors égale à 0,05.

Pour un système fonctionnant à pression atmosphérique, le rapport $n/n_{tot}$ est alors égal à 0,05. Ainsi, X ne représente que 5% en composition molaire de la phase gazeuse.

Dans un système fonctionnant à pression réduite absolue de 0,5 atm, le rapport $n/n_{tot}$ nécessaire à l'obtention d'une activité thermodynamique de 0,1 est alors égal à 0,1. X représente alors 10% en composition molaire de la phase gazeuse à transformer.

Pour un fonctionnement à débit molaire constant sur les deux systèmes, la productivité du système en dépression est multipliée par un facteur deux.

La productivité d'un système fonctionnant en pression réduite permet ainsi un gain de productivité égal à $1/P_{abs}$ du système en comparant ces deux installations à débit molaire constant.

La diminution de la pression totale du système génère également une diminution de la quantité de gaz vecteur pour une productivité donnée.

Dans l'étude comparative précédente, la diminution de moitié de la pression totale du système permet de multiplier par deux la productivité. Le choix d'obtenir une productivité égale permet d'alimenter le réacteur avec deux fois moins de phase gazeuse par unité de temps. Dans un mode de réalisation tel que celui-ci, les coûts engendrés par l'utilisation d'un gaz vecteur comme l'azote sont réduits de moitié, par rapport à un système opérant à la pression atmosphérique.

c) substrats à points d'ébullition élevé

Le réacteur à pression réduite de la présente invention autorise également l'utilisation de substrats à haut point d'ébullition. Ce mode de réalisation retient (" bride ") l'activité thermodynamique de l'eau, élimine totalement la nécessité d'un gaz vecteur et conduit à une forte augmentation de la productivité du réacteur.

Par exemple, avec l'utilisation d'un catalyseur qui nécessite une activité de l'eau d'environ 0,1, la pression totale du système est avantageusement fixée à 0,1 atm. ce qui correspond à la pression partielle en eau nécessaire à l'obtention d'une activité égale à 0,1 pour une catalyse réalisée à 100°C. A cette température le gaz vecteur est constitué uniquement d'eau sous forme de vapeur, au sein duquel sont incorporés les substrats à hauteur de quelques matm. de pression partielle.

Dans un système défini selon la présente invention, l'activité thermodynamique de l'eau ne dépasse pas la valeur seuil de 0,1 même en cas de production d'eau par la réaction. Le réacteur de la présente invention évite toute dénaturation du catalyseur par une augmentation incontrôlée de l'activité thermodynamique dans le système. La productivité du réacteur de l'invention pour la conversion des substrats est alors multipliée par un facteur 10 par rapport à un système fonctionnant à la pression atmosphérique.

d) déplacement des équilibres réactionnels

Le bridage des activités thermodynamiques de certains composés favorisent ainsi les déplacements de l'équilibre réactionnel, tout en augmentant la productivité et en diminuant la consommation de gaz vecteur.

Les avantages des réacteurs de catalyse solide/gaz fonctionnant à pression réduite permettent d'envisager leur utilisation dans de nombreux domaines de l'activité économique. A titre d'exemple, on peut citer :

1) l'utilisation du réacteur pour la production de molécules organiques telles les alcools, les acides carboxyliques, thiol, tiovesters, esters, les aldehydes, les cétones, les oxydes d'alcènes, à partir de substrats qui peuvent être des acides carboxyliques, des alcools primaires et secondaires des cétones notamment.

Un autre aspect de l'invention est l'utilisation du réacteur à catalyse solide/gaz à la production de molécules organiques citées ci-dessus. Lorsqu'il s'agit d'esters, ou d'aldehydes, obtenus par transformation enzymatique d'acides carboxyliques et d'alcool, les produits ainsi obtenus sont utilisables comme les arômes et/ou parfums dans l'industrie cosmétique ou agroalimentaire par exemple. Un autre avantage des produits ainsi obtenus est que, contrairement à ceux obtenus par transformation chimique, ils peuvent prétendre au label naturel conformément à la directive européenne du 22 Juin 1988.

Un autre aspect de l'invention est l'utilisation du réacteur à catalyse solide/gaz au traitement des affluents gazeux, issus de procédés industriels générant des phases gazeuses polluées ; outre les composés classiques, tels S02, H2S, oxydes d'azote, on peut citer les (aldéhydes, alcools, cétones, acides carboxyliques, crésols, phénols, soufrés, amines cycliques, alcanes ou esters (Paul Ceccaldi, 1993, Biofutur, n° 126, p. 20).

Un autre aspect de l'invention est l'utilisation des réacteurs à catalyse solide/gaz à des fins analytiques telles que la conception de précolonnes enzymatiques de dérivatisation ou d'acylation pour la chromatographie en phase gazeuse (CPG), la mise au point d'une chromatographie d'affinité en phase gazeuse ou la réalisation de biocapteurs spécifiques pour la détection de molécules volatiles (réalisation de " nez " artificiels) sont autant d'utilisations directement applicables.

Un autre aspect de l'invention est l'utilisation de réacteurs enzymatiques dans lesquels des cellules entières bactériennes, animales, végétales ou fongiques, sont utilisées pour réaliser des bioconversions. L'avantage du réacteur, dans ce type d'utilisation, est que les activités métaboliques des cellules en cause peuvent être maintenues pendant une période suffisamment longue par le contrôle de l'activité thermodynamique de l'eau, permettant ainsi de réaliser des réactions catalytiques complexes, à plusieurs étapes, au sein d'un même réacteur.

Par ailleurs, dans l'optique de l'utilisation de cellules entières dans les bioconversions, la préparation du biocatalyseur peut être réalisée in situ et les activités métaboliques ou leur régénération peuvent être maintenues par le contrôle de l'activité thermodynamique de l'eau par le procédé et le réacteur selon l'invention.

D'autres avantages et caractéristiques du réacteur, de son fonctionnement et de son utilisation selon la présente invention apparaîtront à la lecture de la description qui suit, accompagnée des figures annexes qui représentent respectivement :

- la figure 1, un schéma d'un réacteur selon l'invention à trois étages;
- les figures 2 à 5, des organigrammes de gestion des commandes successives des principaux organes du réacteur en continu selon l'invention, à savoir respectivement:

- un algorithme d'initialisation et de saisie des paramètres principaux,
- un algorithme de création de tables des conditions opératoires et des séquences d'analyse;
- un algorithme d'acquisition et de contrôle des paramètres; et
- un algorithme de traitement des résultats et de fin d'expérimentation.

La présente invention met en oeuvre le contrôle continu et précis de trois paramètres d'un réacteur à pression réduite en phase solide/gaz : la température, la pression totale du système dite ci-après pression absolue, et les débits molaires des composés, c'est-à-dire de tous les substrats gazeux.

Par débit molaire, on entend la quantité de matière qui circule dans le réacteur par unité de temps et est exprimée en mole par heure (mol/h).

La pression absolue et la température interviennent dans la valeur de l'activité thermodynamique d'un composé.

La pression absolue Pa intervient directement, puisqu'elle est incluse dans la définition de la pression partielle PpX de n moles d'un composé X dans une phase gazeuse de $n_{tot}$ moles par la relation :

$$PpX = (n/n_{tot}).Pa$$

La température intervient pour permettre la détermination de la pression de saturation de référence du composé X pur, PpXref, qui conditionne la valeur de l'activité thermodynamique de ce composé X, aX, définie par

$$aX = PpX / PpXref$$

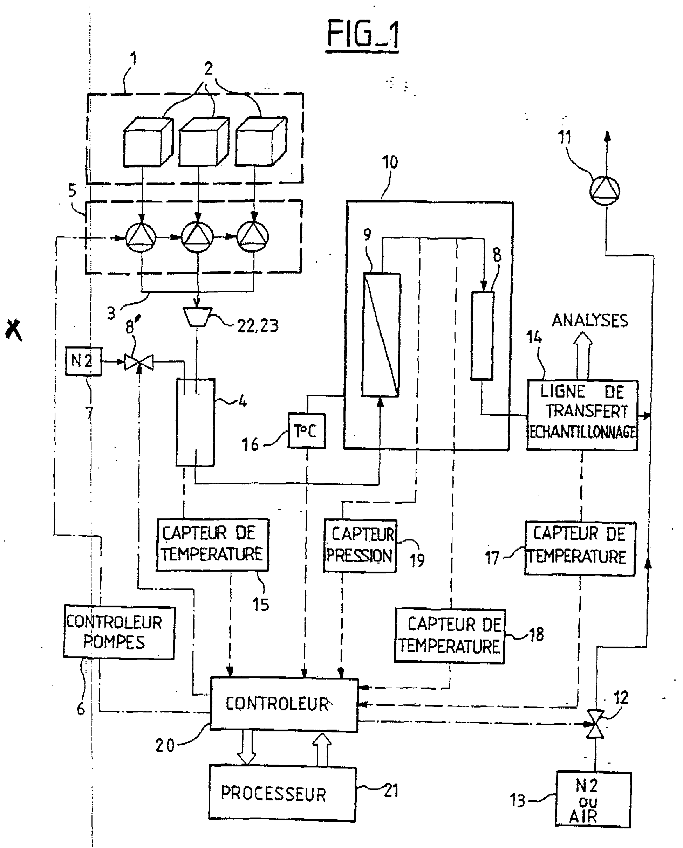

Le contrôle des trois paramètres mentionnés ci-dessus (température, Pa et débits molaires) est illlustré par l'exemple de réalisation de réacteur selon l'invention présenté en figure1.

Trois étages sont définis.

Un premier étage est destiné à la réalisation du mélange gazeux des substrats. Les substrats liquides 1, provenant de cuves 2 contenant les produits purs, sont transportés par des conduits 3 vers des pompes doseuses haute pression 5, gamme d'utilisation 0-1.5 ml/min. Les sorties des pompes doseuses sont alors mises en commun dans une chambre de mélange 22 de volume mort égal à 50$\mu$l, et un dispositif surpresseur 23, taré à 20 bars, est placé en aval de la chambre de mélange afin d'éviter toute vidange des pompes par la dépression régnant en aval. Toute la tuyauterie concernant la veine liquide est réalisée au moyen de tubes en acier inoxydable ou téflon PTFE suivant les contraintes de pression exercés de 1/16$^{ème}$ de pouce de diamètre, toutes les connexions sont de type "Swagelock". La tuyauterie de la phase gazeuse est réalisée en acier Inox 1/8$^{ème}$ de pouce de diamètre, toutes les connexions sont de type "Swagelock".

Le mélange liquide est alors introduit dans un mélangeur-injecteur 4, maintenu à une température de 450°C afin de réaliser un flash liquide-vapeur. Une entrée de gaz neutre additionnelle est réalisée de façon concourante au sein du mélangeur-injecteur 4, et ce débit gazeux est contrôle par un débitmètre massique 8', de gamme 0-500 mln/min.

Le deuxième étage concerne la réaction entre les substrats. Le mélange de substrats est conduit de l'injecteur 4 au bioréacteur proprement dit 8 à travers un échangeur de chaleur 9. Le bioréacteur contient la préparation enzymatique. Le bioréacteur 8 et l'échangeur 9 sont disposés dans une même chambre de réaction 10. Le maintien en température est assuré par une régulation en pression de vapeur d'eau dans une double enveloppe, à 1.2 bars pour 120°C. Des résistances électriques pourraient être utilisées en variante, voire un procédé de chauffage ohmique.

Le troisième étage se rapporte à l'appareillage de contrôle et d'analyse. Une pompe à vide 11 couplée à une valve de contrôle de vide 12 et à un détecteur de rupture de vide est disposée en sortie du bioréacteur, hors la chambre de réaction 10. Une chambre 14 de prélèvement d'échantillons après réaction est insérée sur cette ligne de sortie par transfert à l'aide d'une vanne multivoies à commande pneumatique (non représentée).

Des sondes de contrôle de température, constitués par des thermocouples 15 à 17, sont réparties respectivement sur les différents organes:

- dans le mélangeur-injecteur 4;
- dans la chambre de réaction 10;
- dans la chambre de prélèvement 14.

La sonde 18 permet de mesurer la température et l'activité thermodynamique de l'eau du gaz entrant sur le lit catalytique 8. A cette même entrée, une sonde de pression, constitué par un capteur piézorésistif 19, est également prévue. Ce capteur couvre une gamme de 0 à 1250 mbars et fonctionne en mesure absolue. L'ensemble des sondes de température et de pression est relié à un contrôleur 20 qui commande la valve de régulation du vide 12 dans le bioréacteur 8. Cette commande est effectuée en fonction des données fournies par un microprocesseur 21 en réponse aux données transmises par les différentes sondes et enregistrées par le microprocesseur. L'automatisation et la régulation des conditions de fonctionnement en fonction des données reçues sont assurées par un algorithme de gestion adapté.

En fonctionnement, le gaz vecteur est utilisé de manière optionnelle dans certaines réactions pour l'ajustement des pressions partielles des substrats dans le mélangeur 4. En sortie du réacteur, le gaz vecteur est récupéré à l'aide d'un compresseur et recyclé pour être réintroduit dans le mélangeur.

Ce mélangeur 4 est une chambre d'expansion pour transformer les substrats en phase gazeuse portée dans l'exemple de réalisation à 450°C. Une tête à ultrasons utilisée comme nébulisateur permet de faciliter l'évaporation des substrats par une augmentation conséquente de la surface d'échange en réalisant une injection sous forme de brouillard. Le gaz est introduit dans le bioréacteur par dépression qui a pour effet l'écoulement gazeux au sein du réacteur, écoulement facilité ou non par la présence éventuelle d'un gaz vecteur additionnel. Cette dépression est créée par l'installation de la pompe à vide en sortie du réacteur.

L'échantillonnage pour l'analyse de la phase gazeuse en sortie du bioréacteur 8 est réalisé par une boucle de 250 $\mu$l puis par injection sur une colonne de CPG (chromatographie en phase gazeuse) pour la détermination de sa composition. La détection est effectuée par deux capteurs, un détecteur de conductivité thermique pour l'eau et un détecteur à ionisation de flamme pour toutes les autres molécules organiques.

L'asservissement des différents organes du réacteur est réalisé au moyen du microprocesseur 21 couplé aux différentes sondes et valves par une carte à 16 voies de conversion A/D (analogique/numérique). 8 voies de conversion D/A 12 bits, 40 E/S TTL, 6 Compteurs:horloges. L'algorithme de gestion enregistre en entrée les différentes températures captées, calcule les pression de saturation partielle des différents substrats, et délivre les consignes pour les débitsmètres 6 et 8' ainsi que pour la valve de régulation du vide 12.

Des conditionneurs de thermocouple à double chemisage permettent d'obtenir des précisions sur la mesure de température de $\pm$ 0,1°C dans une gamme de 20 à 150°C. La précision des valeurs de consigne et de lecture des débitmètres est de $\pm$ 0.5% de la capacité maximale des débitmètres, celle des mesures de pression est de $\pm$ 1 mbar. Le calcul des pressions de saturation est effectué par régression linéaire de type exponentielle. avec une erreur absolue maximale de $\pm$ 5.10$^{-4}$ atm.

Dans un mode de réalisation particulier, afin d'éviter une modification constante de la composition de la phase gazeuse au cours du temps, le gaz à transformer au cours de la réaction résulte d'un mélange de plusieurs gaz. Le procédé utilise alors l'équilibre liquide/vapeur pour un premier corps pur afin de réaliser un premier gaz, puis ce premier gaz est mélangé à d'autres gaz obtenus de façon identique.

Afin de régler les différents paramètres, un modèle est utilisé pour adapter le réacteur à la réaction envisagée. La première étape consiste à définir le débit molaire de chaque composé. Ayant accès au débit volumique normalisé ($Q_{VN2}$ normalisé), le débit molaire en azote ($Q_{N2}$) de gaz vecteur est égal à:

$$Q_{N2} = Q_{VN2} \text{ normalisé } /R.T \text{ (mol/h à T=273.15°K)}$$

La connaissance du débit volumique de chaque composé X ($QV^n_X$) permet de calculer le débit molaire de chaque constituant ($Q^n_X$) grâce à la formule:

$$Q^n_X = QV^n_X.r \ / \ MM \quad \text{(mol/h)}$$

avec

    r : masse volumique du produit
    MM : masse molaire du produit

En connaissant alors tous les débits molaires, et la pression absolue Pa dans le système, il est alors possible de calculer pour chacun des composés sa pression partielle dans le gaz d'alimentation ($Pp^n_X$) par la formule :

$$Pp^n_X = Pa.Q^n_X \ /( \ QN2 + S^i \ Q^i_X \ )$$

Les courbes de saturations $Pp^n_X sat = f[T]$ peuvent être déterminées grâce à des logiciels de calcul des propriétés physiques, tels que ceux développés sous le langage « Prosym » (par le logiciel « PROPHY ») (Joulia X. et al (1988), Intern. Chem. Eng. 28: 36-45) et servent à calculer la pression de saturation de référence de_chaque composé ($Pp^n_X sat$ ref) à la température du bioréacteur.

Le calcul de l'activité de chaque composé est alors donné par la formule:

$$aX= Pp^n{}_X / Pp^n{}_X sat\ ref$$

Le débit volumique réel au sein du réacteur est calculé en utilisant la formule suivante:

$$Qvtotal= R.T. ( QN2 + S^i Q^i{}_X ) /Pa$$

avec T=température du bioréacteur en degrés Kelvin

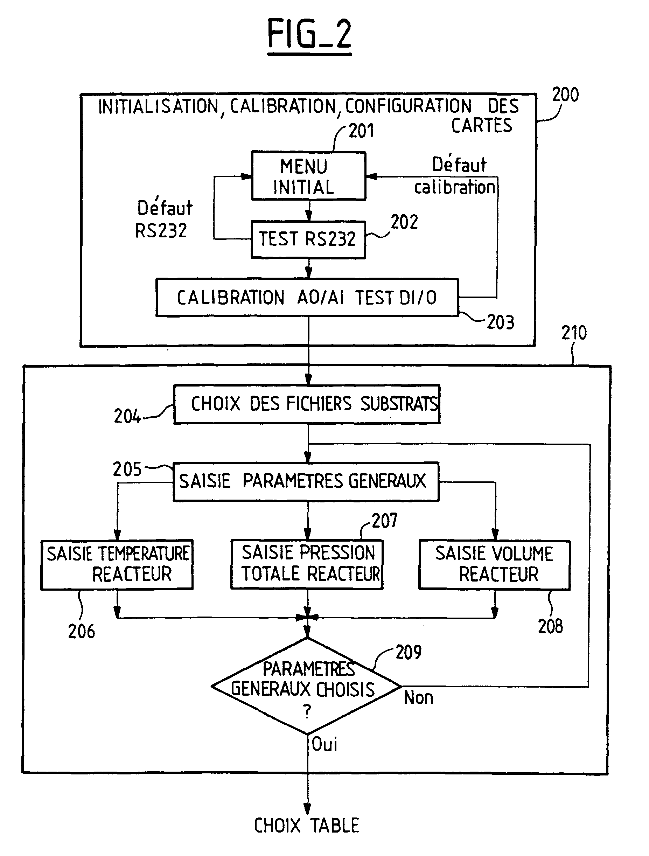

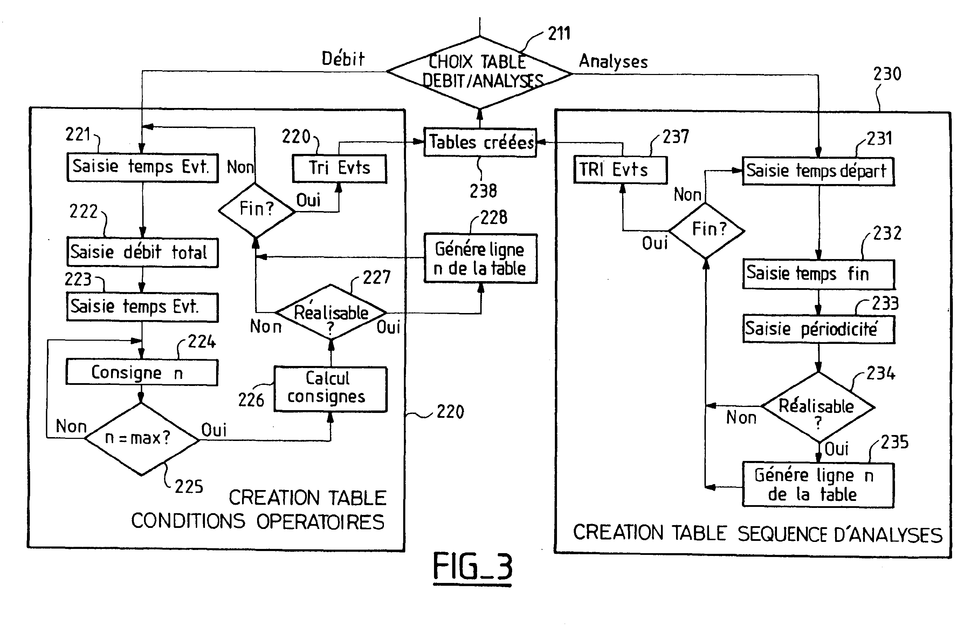

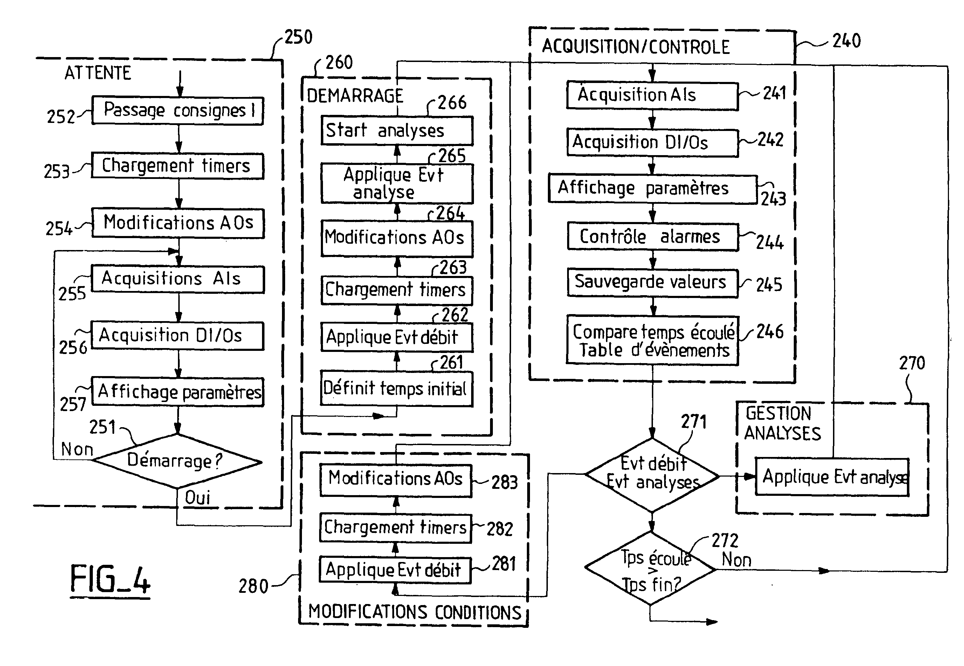

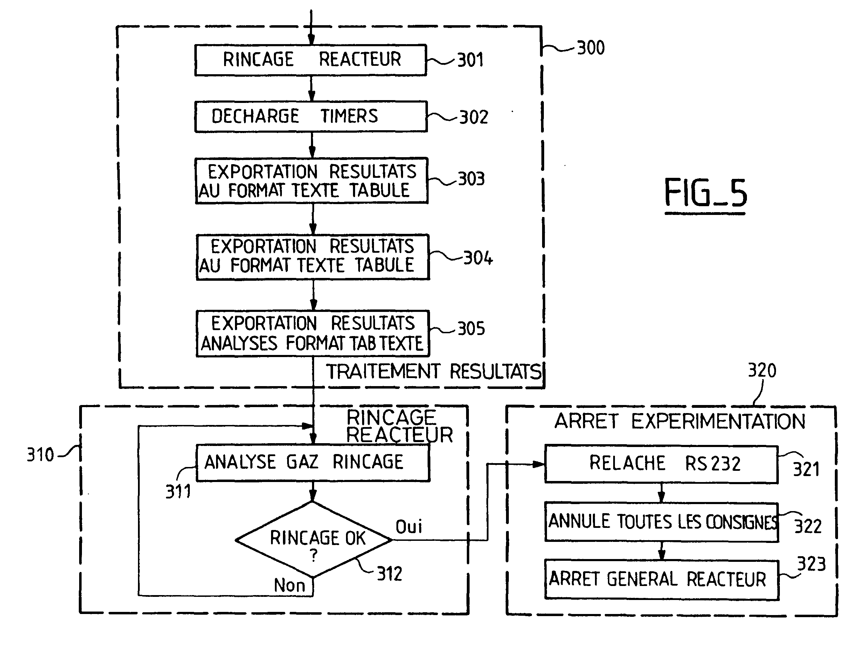

Les algorithmes mis en oeuvre définissent et gèrent dans le temps des séquences d'événements sur les flux gazeux pour varier les conditions opératoires, programmables en pression de vapeur ou en activité thermodynamique, gère les séquences d'injection d'échantillons sur le matériel analytique, et suit en temps réel les paramètres de contrôle dans la chambre de réaction : débits d'entrée et de sortie, pressions partielles, débit molaire et activité de chaque substrat et produit, températures, temps de séjour. La fréquence d'acquisition est de 2 Hz. Les figures 2 à 5 représentent un exemple d'algorithmes de gestion pour respectivement l'initialisation du réacteur (figure 2), la saisie des tables d'événements (figure 3), le mode attente/démarrage de réaction (figure 4), et la fin de réaction (figure 5).

L'algorithme de la figure 2 permet l'initialisation de l'expérimentation, la calibration et la configuration des cartes au bloc 200, par un test adapté correspondant aux étapes 201, 202 et 203. La saisie des paramètres généraux, température, pression et volume du réacteur, est opérée au répertoire 210, par les étapes 204 à 209.

En figure 3, l'algorithme consiste, une fois les paramètres généraux choisis (étape 209), à choisir la table de débit/analyse à l'étape 211 à partir des cartouches de création 220 et 230, respectivement de la table des conditions opératoires (par saisie des temps événements et du débit total en fonction d'une valeur de consigne aux étapes 221 à 225 et par tri des événements aux étapes 226 à 229) et de la table des séquences d'analyses programmées aux étapes 231 à 235 et tri des événements aux étapes 236 et 237 Les tables créées sont stockées à l'étape 238.

Sur la figure 4, l'acquisition et le contrôle des paramètres au bloc 240 sont réalisés à partir des blocs d'attente 250 et de démarrage 260. Le bloc d'attente conditionne le démarrage à l'étape 251 en fonction de l'acquisition des paramètres obtenue aux étapes 252 à 257. Le démarrage est lancé une fois chargés les fichiers des événements de débit et d'analyse aux étapes 261 à 266. Le bloc d'acquisition et de contrôle 240 intègre les étapes 241 à 246 d'acquisition, d'affichage et comparaison des temps écoulés dans les tables d'événements de l'algorithme précédent. La gestion d'analyses au bloc 270 résulte de l'application des événements à l'étape décisionnelle 271. L'étape de comparaison entre le temps écoulé et le temps de fin prédéterminé 272 renvoie au bloc d'acquisition 240. Un bloc de modifications des conditions opératoires 280 permet en trois étapes (281 à 283) de modifier les paramètre de démarrage à l'entrée du bloc d'acquisition.

Enfin la figure 5 illustre les étapes de fin d'expérimentation en trois blocs 300, 310 et 320, concernant respectivement le traitement des résultats, le rinçage du réacteur et l'arrêt de l'expérimentation. Le bloc de traitement 300 les étapes 301 à 305 de rinçage, de décharge des horloges et d'exportation des résultats. Le bloc de rinçage inclut une étape 311 d'analyse du gaz de rinçage et une étape décisionnelle 312. Le bloc d'arrêt recouvre les étapes 321 à 323 de relâche de test, d'annulation des consignes et d'arrêt général du réacteur.

Des exemples d'utilisation du réacteur selon l'invention dans différentes applications suivent.

<u>Exemple 1 : Utilisation d'enzymes lipolytiques.</u>

L'utilisation d'enzymes lipolytiques permet la catalyse de différentes réactions en fonction de la disponibilité en eau du système.

Cette mise en oeuvre particulière de la catalyse en phase solide/gaz ouvre un champ d'application important quant à la production de molécules tels les arômes ou les fragrances notamment. La méthodologie d'utilisation dans un tel système est de surcroît relativement aisée.

L'optimum activité catalytique est obtenu pour une hydratation maximale du catalyseur, situé juste avant l'apparition d'une phase aqueuse distincte représentée par une brusque augmentation de la teneur en eau du catalyseur pour un niveau d'hydratation supérieur. Une fois cet optimum d'hydratation dépassé, la vitesse catalytique chute alors brutalement.

Cette perte d'activité est irrémédiable, et est le fruit de la thermodénaturation du catalyseur par l'action combinée de l'eau et de la température, comme le montre la courbe d'activité résiduelle, mesurée à l'optimum d'hydratation après 24 h d'utilisation continue aux différentes conditions d'hydratation initiales.

Ainsi, l'attrait de la catalyse solide/gaz apparaît clairement concernant la possibilité d'une hydratation contrôlée en continu d'un biocatalyseur, et l'acquisition de la propriété de thermostabilité pour une enzyme sensible à la température dans un milieu aqueux.

Exemple 2 : Réaction d'estérification

La production à pression atmosphérique d'une gamme d'esters de la famille des butyrates et des acétates, d'une longueur de chaîne carbonée maximale de 9 carbones a été effectuée par utilisation de lipase.

Le contrôle des activités thermodynamiques permet de faire fonctionner les hydrolases en réaction de synthèse, contrairement à leur fonctionnement dans un milieu aqueux.

Nous avons effectué la synthèse de propyl butyrate au moyen d'un catalyseur commercial, le NOVOZYME 435 (lipase de C. antartica B immobilisée sur résine) à partir de n-propanol et d'acide butyrique.

Cette réaction d'estérification présente des inconvénients dus à la production d'eau au cours de la réaction. La mise en oeuvre de l'invention tient compte de la modification d'hydratation qui en résulte sur les dernières tranches du lit catalytique. L'expérience montre que le choix d'un catalyseur capable de travailler efficacement à basse activité thermodynamique, et dont l'activité est la moins dépendante d'une variation d'hydratation permet d'optimiser la production de propylbutyrate.

La catalyse solide/gaz apparaît donc comme technologiquement viable pour la réalisation de production propres, sans addition de solvant.

Les résultats présentés ci-dessous dans le tableau I concernent l'extrapolation des résultats obtenus au niveau laboratoire avec une quantité de catalyseur supporté de 50 mg (enzyme +support).

tableau I

| Ratio molaire Alcool/acide | Pression partielle alimentation acide (atm) | Consommation azote (m3n/h) | Production d'ester (kg/h) | Conversion sur acide (%) | Pureté du produit sec (%masse) |
|---|---|---|---|---|---|
| 1.0 | 0.020 | 36.9 | 4.00 | 83,2 | 83,1 |
| 1.5 | 0.020 | 36.5 | 4.50 | 95,0 | 77,2 |
| 2.0 | 0.020 | 36,0 | 4.55 | 97.5 | 66.4 |
| 1.2 | 0.025 | 36.2 | 5.40 | 92.3 | 83.7 |

Le tableau I donne quatre modes de réalisation pour la production d'une molécule, le propyl butyrate, et pour un dimensionnement de réacteur d'une capacité de 1 kg de catalyseur. La température de travail est de 80°C. Le temps de séjour en réacteur est de l'ordre de 0.5 seconde. La constante d'équilibre étant d'environ 40, la conversion maximale pouvant être atteinte est de 83% en ratio acide/alcool 1/1. Il est cependant possible d'augmenter le taux de conversion d'un des substrats en augmentant l'activité thermodynamique du second. Un traitement aval est alors nécessaire (distillation) pour assurer la purification du produit et le recyclage du substrat en excès.

Exemple 3 : Synthèse d'acétate de butyle à partir d'acide acétique glacial et de butanol.

La constante d'équilibre de cette réaction permet d'obtenir aisément un pourcentage de conversion supérieur à 90% dans le cas d'une utilisation mole à mole de substrats. Nous avons travaillé en alimentation mole à mole (alcool/ acide). Le taux de conversion est plus proche de 100% et aucune perte d'activité n'a été observée sur une période de 24 h de fonctionnement. Ces résultats encore préliminaires et non optimisés donnent une production pour un dimensionnement de 1 kg de lit catalytique d'environ 5kg de produit pur /h. Une augmentation de cette valeur est tout à fait envisageable et doit être confirmée expérimentalement.

Exemple 4 : Application des résultats obtenus en catalyse solide/gaz au développement de la chromatographie d'affinité en phase gazeuse.

Le maintien d'une hydratation cohérente avec une stabilité dans le temps et une conformation tridimentionnelle permettant la définition des interactions de faibles énergie impliquées dans les processus de reconnaissance enzymatique (ou entre un anticorps et un antigène) suffit à développer le concept de chromatographie d'affinité en phase gazeuse.

Une colonne de chromatographie avec un greffage comportant un ligand greffé permet de développer le concept de chromatographie d'affinité en phase gazeuse. Par ligand, on entend une molécule de toute nature susceptible de se lier spécifiquement avec un composé présent dans un mélange réactionnel. Il peut s'agir d'une enzyme présentant une affinité pour un substrat. Il peut s'agir d'anticorps présentant une affinité pour un antigène ; dans ce cas, la réaction permet d'épurer le milieu complexe de l'antigène indésirable ; le cas échéant, le produit retenu dans l'un ou l'autre cas peut être récupéré sous forme purifiée par modification des conditions physiques chimiques du milieu.

Ces systèmes peuvent tracer des molécules présentes à de faibles concentration dans une phase gazeuse (par exemple : polluants atmosphériques), et permettre ainsi un dosage rapide et spécifique desdites molécules.

Exemple 5 : Application des résultats obtenus en catalyse solide/gaz au développement de précolonnes de dérivatisation.

L'utilisation de l'activité catalytique permet d'ouvrir la voie au développement de précolonnes de dérivatisation pour la chromatographie en phase gazeuse. Les problèmes rencontrés traditionnellement dans la CPG sont les interactions secondaires entraînant une traînée de pic pour certains composés (ex acides gras libres sur des colonnes apolaires), ou la faible volatilité des composés à analyser (cas des sucres). Ainsi, l'expérimentateur a très souvent recours à une étape de dérivatisation (methylation ou éthylation) afin de pallier à ces problèmes (référence). Une solution pour éviter cette étape et faciliter l'analyse est d'intercaler entre l'injecteur et la colonne de séparation, une colonne active, équivalente à un petit réacteur enzymatique. L'injection des produits à analyser en présence de méthanol pour une méthylation par exemple, permet une dérivatisation in situ post injection du composé avant son passage sur la colonne.

L'invention n'est pas limitée aux exemples décrits. La transformation de produits liquides en phase vapeur constituant le gaz vecteur peut être obtenue d'une part, par tout moyen permettant l'expansion de ces produits à l'intérieur d'une chambre d'injection, et d'autre part par la création d'une dépression entre la sortie et l'entrée du réacteur par tout moyen connu. Par ailleurs les substrats peuvent être en phase gazeuse depuis le premier étage réactionnel.

L'homme du métier saura, dans un réacteur conforme à l'invention, intégrer le réacteur enzymatique le plus approprié, à savoir en lit fixe ou en lit fluidisé.

Certaines formes de réalisation de l'invention sont plus adaptées à certaines applications. Par exemple, dans le cas où un gaz vecteur neutre est utilisé, il paraît important de minimiser la consommation de ce gaz, en particulier pour une application industrielle. Pour ce faire, ce gaz est de préférence recyclé par recompression à sa sortie de pompe à vide et par transmission à un échangeur de chaleur. La condensation des produits de réaction et la purification du gaz vecteur, recyclable en amont du débitmètre massique, sont alors facilitées par couplage du froid à la montée en pression. En particulier, l'utilisation d'une pompe à vide couplée à un compresseur à anneaux liquide est indiquée du fait de leur capacité à accepter une charge importante de produits condensables aussi bien à l'aspiration qu'au refoulement.

Pour des molécules difficiles à condenser, il est avantageux de supprimer l'addition d'azote ou d'air ainsi que la vanne de contrôle en amont de la pompe à vide afin de minimiser la dilution des produits de réaction et améliorer ainsi l'efficacité d'une étape de condensation. Le contrôle de la pression totale est alors réalisé par une vanne placée entre le réacteur et la pompe à vide et asservie à la mesure de pression effectuée en amont du réacteur.

Dans le cas de molécules difficiles à séparer car trop volatiles ou de pression partielle très basse par rapport à leur pression de saturation à la température du condenseur, un système de filtration moléculaire est ajouté en sortie du condenseur, permettant le passage de l'azote à recycler. Dans le cadre d'activités de dépollution, cette solution permet de diminuer les coûts de fonctionnement en évitant l'utilisation de fluide cryogénique pour le piégeage des produits de réaction, dès lors que ces derniers sont présents dans la phase gazeuse à de très faibles dilutions.

Toujours dans le cadre d'activités liées à la dépollution, le couplage d'une pervaporation gaz/gaz à la biocatalyse solide/gaz peut être un atout. Ainsi, dans le cas de traitement de gaz très faiblement chargés, une étape de pervaporation gaz/gaz peut précéder avantageusement la biocatalyse pour permettre un enrichissement en molécules à éliminer avant leur passage sur le bioréacteur. Pour ce faire, l'évaporateur est alors remplacé par le module perméat d'un module de pervaporation et le gaz perméat est envoyé sur le bioréacteur par une pompe à gaz servant de compresseur. L'augmentation de la pression et l'abaissement de la température au niveau du réacteur permettent d'augmenter sensiblement, par un facteur 10 ou 100, l'activité des molécules à traiter. La pression du réacteur est régulée par une vanne de restriction de débit en sortie du réacteur, la pompe à vide ayant été débranchée. Afin de relâcher dans l'atmosphère un gaz propre, ou ne contenant que des molécules dont la toxicité a été éliminée par l'étape catalytique, un second module de pervaporation couplé à un condenseur ou un échangeur cryogénique est placé en aval de la vanne de restriction de débit.

Par ailleurs, dans le cas où le produit du subit un changement d'état, il convient d'ajouter un séparateur gaz/solide en sortie de réacteur, par exemple du type à effet cyclone, lorsque le produit formé est solide, ou un séparateur gaz/liquide si le produit est liquide. Seule la phase gazeuse est alors recyclée vers le groupe de pompage gazeux par passage sur un condenseur en pression.

**Revendications**

1. Procédé réactionnel en continu par catalyse solide/gaz en milieu non conventionnel, mettant en oeuvre différents substrats sous forme gazeuse pour obtenir des produits déterminés, substrats liquides et produits de la réaction enzymatique formant des composés, ledit procédé comprenant au moins :

   - le contrôle en température de la réaction enzymatique pour déterminer la pression de saturation de chaque composé pur intervenant dans la détermination de l'activité thermodynamique dudit composé;
   - le contrôle de la pression totale; et
   - le contrôle des débits molaires des composés et du gaz vecteur, pour régler la composition molaire du mélange gazeux en fonction des valeurs d'activité thermodynamique déterminées de ces composés,
   - la mise en oeuvre de moyens pour que le mélange gazeux contenant les substrats de la réaction enzymatique soit conduit d'un mélangeur-injecteur (4) au bioréacteur proprement dit (8) à travers un échangeur de chaleur (9), le bioréacteur contenant une préparation enzymatique maintenue en température dans une chambre de réaction (10), et
   - en amont de la réaction, la réalisation dudit mélange gazeux pour des pompes doseuses (5) asservies à un contrôleur de débit (6) amenant des substrats liquides (1) provenant de cuves (2) vers le mélangeur-injecteur (4) constituant une unité de flash liquide-vapeur par des conduits (3) équipés d'une chambre de mélange (22) et d'un dispositif surpresseur (23) ; et l'addition d' un gaz vecteur (7) contrôlée par un débitmètre (8') dans le mélangeur-injecteur (4) ; et
   - en aval de la réaction, la mise en oeuvre de moyens reliés à un contrôleur de commande (20) couplé à un processeur de gestion (21) pour que, en fonction des données reçues et des algorithmes de gestion qu'il applique, le processeur transmette au cours du temps des signaux de commande aux différents organes -pompes, sondes et valve- afin de régler la température, la pression totale et les débits molaires en fonction de valeurs d'activité thermodynamiques déterminées, ces moyens comprenant au moins une pompe à vide (11) couplée à une valve de contrôle de pression (12) et à un détecteur de rupture de vide, une chambre (14) de prélèvement d'échantillons insérée sur la ligne de sortie par transfert à l'aide d'une vanne multivoies à commande pneumatique,
   - pression totale étant maintenue à une valeur réduite par rapport à la pression atmosphérique, et
   - le recyclage du gaz vecteur par recompression à sa sortie de pompe à vide et par transmission à un échangeur de chaleur, et
   - dans le cas où le produit de réaction subit un changement d'état, la séparation gaz/solide ou gaz/liquide en sortie de réacteur, seule la phase gazeuse étant alors recyclée.

2. Réacteur pour la mise en oeuvre d'un procédé réactionnel en continu par catalyse solide/gaz en milieu non conventionnel, mettant en oeuvre différents substrats sous forme gazeuse pour obtenir des produits déterminés, substrats liquides et produits de la réaction enzymatique formant des composés, selon la revendication 1, ledit procédé comprenant au moins :

   - le contrôle en température de la réaction enzymatique pour déterminer la pression de saturation de chaque composé pur intervenant dans la détermination de l'activité thermodynamique dudit composé;
   - le contrôle de la pression totale; et
   - le contrôle des débits molaires des composés et du gaz vecteur, pour régler la composition molaire du mélange gazeux en fonction des valeurs d'activité thermodynamique déterminées de ces composés,

   le réacteur comportant :

   - des moyens pour que le mélange gazeux contenant les substrats de la réaction enzymatique soit conduit d'un mélangeur-injecteur (4) au bioréacteur proprement dit (8) à travers un échangeur de chaleur (9), le bioréacteur contenant une préparation enzymatique maintenue en température compris dans une chambre de réaction (10), et
   - en amont, un premier étage destiné à la réalisation dudit mélange gazeux et comprenant :

     - des pompes doseuses (5) asservies à un contrôleur de débit (6) amenant des substrats liquides (1) provenant de cuves (2) vers le mélangeur-injecteur (4) constituant une unité de flash liquide-vapeur par des conduits (3) équipés d'une chambre de mélange (22) et d'un dispositif surpresseur (23) ; et
     - des moyens pour amener un gaz vecteur (7) équipé d'un débitmètre (8') dans le mélangeur-injecteur (4) ; et

- en aval, un étage se rapportant à l'appareillage de contrôle et d'analyse comprenant ladite pompe à vide (11) couplée à une valve de contrôle de pression (12) et à un détecteur de rupture de vide, une chambre (14) de prélèvement d'échantillons après réaction étant insérée sur cette ligne de sortie par transfert à l'aide d'une vanne multivoies à commande pneumatique, ainsi que

- des moyens pour que la pression totale soit maintenue à une valeur réduite par rapport à la pression atmosphérique, comportant au moins ladite pompe à vide, et

- des moyens pour recycler le gaz vecteur par recompression à sa sortie de pompe à vide et par transmission à un échangeur de chaleur, et,

- dans le cas où le produit de réaction subit un changement d'état, un séparateur gaz/solide ou gaz/liquide ajouté en sortie de réacteur, seule la phase gazeuse étant alors recyclée vers le groupe de pompage gazeux par passage sur un condenseur en pression.

3. Réacteur selon la revendication 2, **caractérisé en ce que** les sondes de contrôle de température constituées par des thermocouples (15 à 18) sont réparties respectivement sur les différents organes, la sonde de pression est constituée par un capteur piézorésistif (19), l'ensemble des sondes de température et de pression est relié au contrôleur (20) qui commande la valve de régulation du vide (12) dans le bioréacteur (8), cette commande étant effectuée en fonction des données fournies par un microprocesseur (21) en réponse aux données transmises par les différentes sondes et enregistrées par le microprocesseur,et l'automatisation et la régulation des conditions de fonctionnement en fonction des données reçues sont assurées par un algorithme de gestion adapté.

4. Réacteur selon revendication 2, **caractérisé en ce que** le mélangeur (4) comporte une tête à ultrasons utilisée comme nébulisateur afin d'augmenter la surface d'échange lors du flash liquide-vapeur, l'échantillonnage pour l'analyse de la phase gazeuse en sortie du bioréacteur (8) est réalisé par une boucle puis par injection sur une colonne de chromatographie en phase gazeuse (CPG) pour la détermination de sa composition, la détection étant effectuée par deux capteurs, un pour l'eau et un pour toutes les autres molécules organiques.

5. Réacteur selon l'une quelconque des revendications 2 à 4, **caractérisé en ce que** l'asservissement des différents organes du réacteur est réalisé au moyen d'un microprocesseur (21) couplé aux organes de contrôle par une carte comportant des voies de conversion A/D (analogique/numérique), des voies de conversion D/A 12 bits, et au moins un signal en mode TTL, et **en ce que** l'algorithme de gestion enregistre en entrée les différentes températures captées, calcule les pression partielles et les pressions de saturation de référence pour calculer les activités thermodynamiques respectives des différents substrats, et délivré les consignes pour les débitmètres (6, 8) ainsi que pour la valve de régulation du vide (12).

6. Réacteur selon revendication 2, **caractérisé en ce que** des conditionneurs des thermocouples sont choisis pour donner des précisions sur la mesure de température de $\pm$ 0, 1° C dans une gamme de 20 a 150° C , **en ce que** la précision des valeurs de consigne et de lecture des pompes doseuses est de $\pm$ 0,5% de la capacité maximale des débitmètres, celle des mesures de pression est de $\pm$ 1 mbar pour que le calcul des pressions de saturation, effectué par régression linéaire de type exponentielle, fournisse des valeurs avec une erreur absolue maximale de $\pm$ $5.10^{-4}$ atm.

7. Réacteur selon l'une quelconque des revendications 2 et 5, **caractérisé en ce que** les algorithmes mis en oeuvre définissent et gèrent dans le temps des séquences d'événements (240 à 280) sur les flux gazeux pour varier les conditions opératoires programmables en pression de vapeur ou en activité thermodynamique (210 à 230), gèrent les séquences d'injection d'échantillons sur le matériel analytique (210, 220, 230, 240), et suivent en temps réel les paramètres de contrôle dans la chambre de réaction (280, 240) : débits d'entrée et de sortie, pressions partielles, débit molaire et activité de chaque substrat et produit, températures, temps de séjour, pour respectivement l'initialisation du réacteur (210, 250), la calibration de la carte de lecture du processeur (200), la saisie des tables d'événements (211, 220, 230), le mode attente/démarrage de réaction (250, 260) et la fin de réaction (300 à 323).

8. Réacteur selon l'une quelconque des revendications 2 à 7, **caractérisé en ce que**, dans le cas de molécules difficiles a séparer, un système de filtration moléculaire est ajouté en sortie du condenseur et l'utilisation d'un fluide cryogénique est supprimée.

9. Réacteur selon l'une quelconque des revendications 2 à 8 **caractérisé en ce qu'**une pervaporation gaz/gaz est couplée à la biocatalyse solide/gaz pour permettre un enrichissement en molécules à éliminer avant leur passage sur le bioréacteur.

**10.** Utilisation d'un réacteur selon quelconque des revendications 2 à 9 pour la production de molécules organiques telles les alcools, les acides carboxyliques, thiol, thioesters, esters, les aldéhydes, les cétones, les oxydes d'alcènes, et lactones.

**11.** Utilisation du réacteur selon la revendication 10, **caractérisée en ce que** les molécules produites sont utilisables comme arômes ou fragrances.

**12.** Utilisation d'un réacteur selon l'une quelconque des revendications 2 à 9 pour la bioépuration d'effluents gazeux.

**13.** Utilisation d'un réacteur selon l'une quelconque des revendications 2 à 9 pour réaliser des biocapteurs spécifiques pour la détection de molécules volatiles pour former un nez artificiel.

**14.** Utilisation d'un réacteur selon l'une quelconque des revendications 2 à 9 pour l'analyse de molécules obtenues par un outil analytique connu, par couplage du réacteur à cet outil.

**15.** Utilisation selon la revendication 14, **caractérisée en ce que** le réacteur constitue une précolonne enzymatique de dérivatisation pour le procédé de séparation en chromatographie en phase gazeuse (CPG).

**Claims**

**1.** Continuous reaction process by solid/gas catalysis in unconventional medium, making use of different substrates in gas form to obtain defined products, liquid substrates and products of the enzymatic reaction forming compounds, said process comprising at least:

- the control of the temperature of the enzymatic reaction to determine the saturation pressure of each pure compound implicated in the determination of the thermodynamic activity of said compound;
- the control of the total pressure; and
- the control of the molar fluxes of the compounds and of the vector gas, in order to control the molar composition of the gas mixture as a function of the thermodynamic activity values determined for these compounds,
- the carrying out of means for conducting the gas mixture containing the substrates of the enzymatic reaction from a mixer-injector (4) to the bioreactor itself (8) through a heat exchanger (9), the bioreactor containing an enzyme preparation, which is maintained in temperature in a reaction chamber (10), and
- upstream from the reaction, the production of said gas mixture by means of dosage pumps (5) regulated by a flux controller (6) conveying liquid substrates (1) supplied from vats (2) to the mixer-injector (4) constituting a liquid-vapour flash unit through pipes (3) equipped with a mixing chamber (22) and a booster device (23) ; and the addition of a vector gas monitored via a flow meter (8') into the mixer-injector (4); and
- downstream from the reaction, the carrying out of means being connected to a command controller (20) coupled to a management processor (21) so that, as a function of the data received and the management algorithms which it applies, the processor transmits during the course of time command signals to the different organs - pumps, probes and valve - in order to control the temperature, the total pressure and the molar fluxes as a function of determined thermodynamic activity values, said means comprising at least a vacuum pump (11) coupled to a pressure control valve (12) and to a vacuum break detector, a sampling chamber (14) inserted into the outlet line by transfer with the aid of a pneumatically controlled multi-channel valve;
- the total pressure being maintained at a value reduced compared to atmospheric pressure, and
- the recycling of the vector gas by recompression at its vacuum pump outlet and by transference to a heat exchanger, and
- in the case where the reaction product undergoes a change of state, the gas/solid or gas/liquid separation at the reactor outlet, only the gas phase being then recycled.

**2.** Reactor for carrying out a continuous reaction process by solid by solid/gas catalysis in unconventional medium, making use of different substrates in gas form to obtain defined products, liquid substrates and products of the enzymatic reaction forming compounds, according to claim 1, said process comprising at least :

- the control of the temperature of the enzymatic reaction to determine the saturation pressure of each pure compound implicated in the determination of the thermodynamic activity of said compound;
- the control of the total pressure; and
- the control of the molar fluxes of the compounds and the vector gas, in order to control the molar composition of the gas mixture as a function of the thermodynamic activity values determined for these compounds, the reactor comprising

- means for conducting the gas mixture containing the substrates of the enzymatic reaction from a mixer-injector (4) to the bioreactor itself (8) through a heat exchanger (9), the bioreactor containing an enzyme preparation maintained in temperature being included in a reaction chamber (10) and
- upstream, a first stage designed to produce said gas mixture and comprising:

  - dosage pumps (5) regulated by a flux controller (6) conveying liquid substrates (1) supplied from vats (2) to a mixer-injector (4) constituting a liquid-vapour flash unit through pipes (3) equipped with a mixing chamber (22) and a booster device (23);
  - means to convey a vector gas (7) equipped with a flow meter (8') into the mixer-injector (4); and

- downstream, a stage which relates to the control and analytical equipment comprising said vacuum pump (11) coupled to a pressure control valve (12) and to a vacuum break detector, a post-reaction sampling chamber (14) being inserted into this outlet line by transfer with the aid of a pneumatically controlled multi-channel valve, as well as
- means for maintaining the total pressure at a value reduced compared with atmospheric pressure, comprising at least said vacuum pump and
- means for recycling the vector gas by recompression at its vacuum pump outlet and by transference to a heat exchanger, and
- in the case where the reaction product undergoes a change of state, a gas/solid or gas/liquid separator is added at the reactor outlet, only the gas phase being then recycled towards the gas pumping group by passage through a pressure condenser.

3. Reactor according to Claim 2, **characterized in that** the temperature control probes consisting of thermocouples (15 to 18) are distributed on the different organs, the pressure probe consists of a piezoresistive sensor (19), the set of temperature and pressure probes is connected to the controller (20) which regulates the vacuum regulation valve (12) in the bioreactor (8), this control being exercised as a function of the data supplied by a microprocessor (21) in response to the data transmitted by the different probes and recorded by the microprocessor, and the automation and regulation of the operating conditions as a function of the data received are ensured by an appropriate management algorithm.

4. Reactor according to Claim 2, **characterized in that** the mixer (4) comprises an ultrasonic head used as nebulizer in order to increase the exchange surface during the liquid-vapour flash, the sampling for the analysis of the gas phase at the outlet of the bioreactor (8) is performed by means of a loop, then by injection onto a GC column for the determination of its composition, the detection being made by two sensors, one for water and one for all of the other organic molecules.

5. Reactor according to any one of the Claims 2 to 4, **characterized in that** the control of the different organs of the reactor is exercised by means of the microprocessor (21) coupled to the control organs by a chart comprising A/D (analog/digital) conversion channels, 12 bits D/A conversion channels, and at least one signal in the TTL mode, and **in that** the management algorithm records at inlet the different temperatures measured, calculates the partial pressures and the reference saturation pressures in order to calculate the respective thermodynamic activities of the different substrates and delivers the instructions for the flow meters (6,8) as well as for the vacuum regulation valve (12).

6. Reactor according to Claim 2, **characterized in that** thermocouple conditioners are chosen to give accuracies of temperature measurements of $\pm$ 0.1°C over a range of 20 to 150°C, **in that** the accuracy of the entered and read-out values of the dosage pumps is $\pm$ 0.5% of the maximal capacity of the flow meters, that of the pressure measurements is $\pm$ 1 mbar so that the calculation of the saturation pressures made by linear regression of the exponential type provides values with a maximal absolute error of $\pm$ $5.10^{-4}$ atm.

7. Reactor according to any one of Claims 2 and 5, **characterized in that** the algorithms used define and manage over time sequences of events (240 to 280)) concerning the gas fluxes in order to vary the operating conditions programmable as vapour pressure or thermodynamic activity (210 to 230), manage the sample injection sequences into the analytical equipment (210, 220, 230, 240) and monitor in real time the control parameters in the reaction chamber (280, 240): inlet and outlet fluxes, partial pressures, molar flux and activity of each substrate and product, temperatures, residence times, for the initialization of the reactor (210, 250), the calibration of the processor reading chart (200), the access of the tables of events (211, 220, 230), the wait/start reaction mode (250, 260) and the end of reaction (300 to 323).

8. Reactor according to any one of the Claims 2 to 7, **characterized in that** in the case of molecules difficult to separate, a molecular filtration system is added at the condenser outlet and the use of a cryogenic fluid is dispensed with.

9. Reactor according to any one of the Claims 2 to 8, **characterized in that** a gas/gas pervaporation is coupled to the solid/gas biocatalysis to lead to an enrichment of molecules to be eliminated before their passage into the bioreactor.

10. Use of a reactor according to any one of the Claims 2 to 9 and 16 for the production of organic molecules such as alcohols, carboxylic acids, thiols, thioesters, esters, aldehydes, ketones, alkene oxides and lactones.

11. Use of a reactor according to the Claim 10, **characterized in that** the molecules produced can be used as flavours or fragrances.

12. Use of a reactor according to any one of the Claims 2 to 9 for the biopurification of gas effluents.

13. Use of a reactor according to any one of the Claims 2 to 9 for the production of biosensors specific for the detection of volatile molecules to form an artificial nose.

14. Use of a reactor according to any one of the Claims 2 to 9 for the analysis of molecules obtained by means of a known analytical instrument by coupling of the reactor to this instrument.

15. Use according to Claim 14, **characterized in that** the reactor constitutes an enzymatic derivatization precolumn for the separation procedure used in gas chromatography (GC).

**Patentansprüche**

1. Kontinuierliches katalytisches Feststoff/Gas-Reaktionsverfahren in nichtkonventionellen Medium unter Verwendung verschiedener gasförmiger Substrate zur Herstellung von bestimmten Produkten, flüssigen Substraten und Produkten durch Enzymreaktion zum Bilden von Verbindungen, wobei das besagte Verfahren mindestens umfasst:

- die Temperaturkontrolle der Enzymreaktion zur Bestimmung des Sättigungsdrucks jeder reinen Verbindung, der die Bestimmung der thermodynamischen Aktivität der besagten Verbindung beeinflusst;
- die Kontrolle des Gesamtdrucks; und
- die Kontrolle der molaren Durchflüsse der Verbindungen und des Trägergases, zur Regelung der molaren Zusammensetzung des Gasgemischs entsprechend den Werten der thermodynamischen Aktivität, die von diesen Verbindungen bestimmt werden,
- die Verwendung von Mitteln zur Leitung des die Substrate der Enzymreaktion enthaltenden Gasgemischs von einem Misch-Einspritz-Gerät (4) zum eigentlichen Bioreaktor (8) über einen Wärmeaustauscher (9), wobei der Bioreaktor eine Enzympräparation enthält, deren Temperatur in einer Reaktionskammer (10) aufrechterhalten wird; und
- vor der Reaktion, die Herstellung des besagten Gasgemischs mittels von einer Durchflusskontrolleinheit (6) untergeordneter Dosierpumpen (5) zur Zuführung der flüssigen Substrate (1) aus den Behältern (2) zum Misch-Einspritz-Gerät (4), der eine Flüssig-Dampf Flash-Einheit bildet. Ober Leitungen (3), die mit einer Mischkammer (22) und einem Überdruckerzeuger (23) ausgestattet sind; und Zugabe eines Trägergases (7), kontrolliert durch einen Durchflussmesser (8') im Misch-Einspritz-Gerät (4); und
- nach der Reaktion, die Verwendung von Mitteln, die an eine Befehls-Kontrolleinheit (20) angeschlossen sind, die mit einem Verwaltungs-Prozessor (21) gekoppelt ist, damit der Prozessor entsprechend den empfangenen Daten und den vom ihm verwendeten Verwaltungsalgorithmen im Verlauf Befehlssignale an die verschiedenen Organe - Pumpen, Sonden und Ventil - überträgt, um die Temperatur, den Gesamtdruck und die molaren Durchflüsse entsprechend den bestimmten Werten der thermodynamischen Aktivität zu regeln, wobei diese Mittel mindestens eine Vakuumpumpe (11), gekoppelt an ein Druckkontrollventil (12) und an einen Vakuumleckdetektor, eine Kammer (14) zur Probenentnahme, die in die Ausgangsleitung durch Transfer mit Hilfe eines pneumatischen Mehrwegeventils eingefügt ist, umfassen.
- der Gesamtdruck, der auf einem im Vergleich zum atmophärischen Druck niedrigeren Wert gehalten wird, und
- die Rückführung des Trägergases durch Rückverdichtung bei Austritt aus der Vakuumpumpe und durch Weiterleitung zu einem Wärmeaustauscher, und
- für den Fall, dass das Reaktionsprodukt einen Phasenwechsel durchläuft, die Trennung Gas/Feststoff oder Gas/Flüssigkeit bei Austritt aus dem Reaktor, wobei nur die Gasphase rückgeführt wird.

2. Reaktor zur Durchführung eines kontinuierlichen katalytischen Feststoff/Gas-Reaktionsverfahrens in nicht-konventionellem Medium unter Verwendung verschiedener gasförmiger Substrate zur Herstellung von bestimmten Produkten, flüssigen Substraten und Produkten einer Enzymreaktion zum Bilden von Verbindungen, gemäß Anspruch 1, wobei das besagte Verfahren mindestens umfasst:

- die Temperaturkontrolle der Enzymreaktion zur Bestimmung des Sättigungsdrucks jeder reinen Verbindung, der die Bestimmung der thermodynamischen Aktivität der besagten Verbindung beeinflusst;
- die Kontrolle des Gesamtdrucks; und
- die Kontrolle der molaren Durchflüsse der Verbindungen und des Trägergases, zur Regelung der molaren Zusammensetzung des Gasgemischs entsprechend den Werten der thermodynamischen Aktivität, die von diesem Verbindungen bestimmt werden,

wobei der Reaktor umfasst;

- Mittel zur Leitung des die Substrate der Enzymreaktion enthaltenden Gasgemischs von einem Misch-Einspritz-Gerät (4) zum eigentlichen Bioreaktor (8) über einen Wärmeaustauscher (9), wobei der Bioreaktor eine Enzympräparation enthält, deren Temperatur in einer Reaktionskammer (10) aufrechterhalten wird, und
- vorgeschaltet, eine erste Stufe zur Herstellung des besagten Gasgemischs, umfassend;

- einer Durchflusskontrolleinheit (6) untergeordnete Dosierpumpen (5) zur Zuführung der flüssigen Substrate (1) aus Behältern (2) zum Misch-Einspritz-Gerät (4), der eine Flüssig-Dampf Flash-Einheit bildet, über Leitungen (3), die mit einer Mischkammer (22) und einem Überdruckerzeuger (23) ausgestattet sind; und
- Mittel zur Zuführung eines Trägergases (7), ausgestattet mit Durchflussmesser (8') im Misch-Einspritz-Gerät (4); und

- nachgeschaltet, eine an die Kontroll- und Analyseanlagen meldende Stufe, umfassend die besagte Vakuumpumpe (11), angeschlossen an einen Druckkontrollventil (12) und an einen Vakuumleckdetektor, eine Kammer (14) zur Probenentnahme nach Reaktion, die in diese Ausgangsleitung durch Transfer mit Hilfe eines pneumatischen Mehrwegeventils eingefügt ist, sowie
- Mittel zum Halten des Gesamtdrucks auf einem im Vergleich zum atmosphärischen Druck niedrigeren Wert, die mindestens die besagte Vakuumpumpe umfassen, und
- Mittel zur Rückführung des Trägergases durch Rückverdichtung bei Austritt aus der Vakuumpumpe und durch Weiterleitung zu einem Wärmeaustauscher, und,
- für den Fall, dass das Reaktionsprodukt einen Phasenwechsel durchläuft, eine Trennvorrichtung Gas/Feststoff oder Gas/Flüssigkeit angefügt am Austritt aus dem Reaktor, wobei nur die Gasphase zur Gaspumpvorrichtung durch Durchlaufen eines Druckkondensators rückgeführt wird.

3. Reaktor nach Anspruch 2, **dadurch gekennzeichnet, dass** die Temperaturkontrollsonden, gebildet durch Thermoelemente (15 bis 18), jeweils über die verschiedenen Organe verteilt sind, die Drucksonde durch einen piezoresistiven Sensor (19) gebildet ist, die Gesamtheit der Temperatur- und Drucksonden mit der Kontrolleinheit (20) verbunden sind, welche das Vakuumregelventil (12) im Bioreaktor (8) steuert, wobei diese Steuerung entsprechend den von einem Mikroprozessor (21) gelieferten Daten durchgeführt wird als Antwort auf von den verschiedenen Sonden übertragene und vom Mikroprozessor aufgezeichnete Daten, und dass die Automatisierung und die Regelung der Funktionsbedingungen entsprechend empfangenen Daten von einen angepassten Vennraltungsalgorithmus sichergestellt werden.

4. Reaktor nach Anspruch 2, **dadurch gekennzeichnet, dass** das Mischgerät (4) einen Ultraschallkopf aufweist, der als Nebler zur Vergrößerung der Austauschfläche während des Flashs Flüssig-Dampf dient, dass das Probenziehen zur Analyse der Gasphase am Austritt des Bioreaktors (8) durch eine Schleife, erfolgt von einer Injektion auf eine Gaschromatographie-(GC-) Säule bewirkt wird, um Ihre Zusammensetzung zu bestimmen, wobei zwei Detektoren die Messdaten erfassen, einer für das Wasser und einer für alle anderen organischen Moleküle.

5. Reaktor nach einem der Ansprüche 2 bis 4, **dadurch gekennzeichnet, dass** die verschiedenen Reaktororgane mittels eines Mikroprozessors (21) verwaltet werden, der mit den Kontrollorganen über eine Karte, enthaltend A/D-Umwandler (analog/digital), 12 Bit D/A-Umwandler und mindestens ein Signal im TTL-Modus verbunden ist, und dass der Verwaltungsalgorithmus zu Beginn die verschiedenen Temperaturen aufzeichnet, die Partialdrücke und die Refemz-Sättigungsdrücke berechnet, um die jeweiligen thermodynamischen Aktivitäten der verschiedenen Substrate zu berechnen, und die Anweisungen für die Durchflussmesser (6, 8) sowie das Vakuumregelventil (12) ausfertigt.

6. Reaktor nach Anspruch 2, **dadurch gekennzeichnet, dass** die Konditionierer der Thermoelemente ausgewählt sind, um bei der Temperaturmessung Genauigkeiten von $\pm$ 0,1°C im Bereich von 20 bis 150°C zu geben, dass die Genauigkeit der Soll- und Ablesewerte der Dosierpumpen +- 0,5 % der maximalen Kapazität der Durchflussmesser beträgt, die der Druckmessungen $\pm$ 1 mbar beträgt, damit die Berechnung der Sättigungsdracke, die durch lineare Regression exponentiellen Typs durchgeführt wird, Werte mit einem absoluten Fehler von maximal $\pm 5.10^{-4}$ atm ergibt.

7. Reaktor nach einem der Ansprüche 2 und 5, **dadurch gekennzeichnet, dass** die verwendeten Algorithmen zeitliche Reihenfolgen von Ereignissen (240 bis 280) der Gasflüsse festlegen und steuern, um die Operationsbedingungen zu variieren, die hinsichtlich Dampfdruck oder thermodynamischer Aktivität programmierbar sind (210 bis 230), die Injektionsreihenfolgen von Proben des Analysematerials steuern (210, 220, 230, 240) und in Echtzeit die Kontroilparameter in der Reaktionskammer verfolgen (280, 240): Eintritts- und Austrittsdurchflüsse, Partialdrücke, molarer Durchfluss und Aktivität jedes Substrats und Produkts, Temperaturen, Verweilzeiten, jeweils zur Initialisierung des Reaktors (210, 250), zur Kalibrierung der Lesekarte des Prozessors (200), zur Erfassung der Ereignistabellen (211, 220. 230), zum Reaktionsmodus Warten/Starten (250, 260) und zur Beendigung der Reaktion (300 bis 323).

8. Reaktor nach einem der Ansprüche 2 bis 7, **dadurch gekennzeichnet, dass** im Falle schwer zu trennender Moleküle ein Molekularfiltereystem am Ausgang des Kondensators hinzugefügt ist und die Verwendung einer Kryoflüssigkeit unterbleibt.

9. Reaktor nach einem der Ansprüche 2 bis 8, **dadurch gekennzeichnet, dass** eine Pervaporation Gas/Gas an die Biokatalyse Feststoff/Gas gekoppelt ist, um die Anreicherung zu eliminierender Moleküle vor ihrem Eintritt in den Bioreaktor zu ermöglichen.

10. Verwendung eines Reaktors nach einem der Ansprüche 2 bis 9 zur Herstellung organischer Moleküle wie Alkohole, Carbonsäuren, Thiol, Thioester, Ester, Aldehyde, Ketone, Alkenoxide und Laktone.

11. Verwendung des Reaktors nach Anspruch 10, **dadurch gekennzeichnet, dass** die hergestellten Moleküle als Aromen oder Duftstoffe verwendbar sind.

12. Verwendung eines Reaktors nach einem der Ansprüche 2 bis 9 zur biologischen Reinigung von Abgasen.

13. Verwendung eines Reaktors nach einem der Ansprüche 2 bis 9 zur Herstellung spezifischer Biosensoren zur Detektion flüchtiger Moleküle, um eine künstliche Nase zu bilden.

14. Verwendung eines Reaktors nach einem der Ansprüche 2 bis 9 zur Analyse von Molekülen, die von einem bekannten Analysegerät erhalten werden, durch Anschluss des Reaktors an dieses Gerät.

15. Verwendung nach Anspruch 14, **dadurch gekennzeichnet, dass** der Reaktor eine enzymatische Derivatisierungs-Vorsäule für das Gaschromatographie-(GC-) Trennverfahren darstellt.

# FIG_1

N2

22,23

ANALYSES

LIGNE DE
TRANSFERT
ECHANTILLONNAGE

T°C

CAPTEUR DE
TEMPERATURE

CAPTEUR
PRESSION

CAPTEUR DE
TEMPERATURE

CONTROLEUR
POMPES

CAPTEUR DE
TEMPERATURE

CONTROLEUR

N2
ou
AIR

PROCESSEUR

# FIG_2

INITIALISATION, CALIBRATION, CONFIGURATION DES CARTES — 200

MENU INITIAL — 201

Défaut RS232

Défaut calibration

TEST RS232 — 202

CALIBRATION AO/AI TEST DI/O — 203

210

CHOIX DES FICHIERS SUBSTRATS — 204

SAISIE PARAMETRES GENERAUX — 205

SAISIE TEMPERATURE REACTEUR — 206

SAISIE PRESSION TOTALE REACTEUR — 207

SAISIE VOLUME REACTEUR — 208

PARAMETRES GENERAUX CHOISIS ? — 209

Non

Oui

CHOIX TABLE

EP 1 005 392 B1

211 CHOIX TABLE DEBIT/ANALYSES

Débit — Analyses

230

221 Saisie temps Evt.

220 Tri Evts

Tables créées

237 TRI Evts

231 Saisie temps départ

Fin? — Non / Oui

238

222 Saisie débit total

228 Génère ligne n de la table

Fin? — Non / Oui

232 Saisie temps fin

223 Saisie temps Evt.

227 Réalisable? — Non / Oui

233 Saisie périodicité

224 Consigne n

226 Calcul consignes

234 Réalisable? — Non

235 Oui — Génère ligne n de la table

225 n = max? — Non / Oui

220

CREATION TABLE CONDITIONS OPERATOIRES

CREATION TABLE SEQUENCE D'ANALYSES

FIG_3

EP 1 005 392 B1

**ATTENTE** — 250

252 — Passage consignes I

253 — Chargement timers

254 — Modifications AOs

255 — Acquisitions AIs

256 — Acquisition DI/Os

257 — Affichage paramètres

251 — Démarrage ?
Non
Oui

**DEMARRAGE** — 260

266 — Start analyses

265 — Applique Evt analyse

264 — Modifications AOs

263 — Chargement timers

262 — Applique Evt débit

261 — Définit temps initial

**MODIFICATIONS CONDITIONS**

283 — Modifications AOs

282 — Chargement timers

281 — Applique Evt débit

280

**ACQUISITION/CONTROLE** — 240

241 — Acquisition AIs

242 — Acquisition DI/Os

243 — Affichage paramètres

244 — Contrôle alarmes

245 — Sauvegarde valeurs

246 — Compare temps écoulé Table d'évènements

271 — Evt débit Evt analyses

272 — Tps écoulé > Tps fin ?
Non

**GESTION ANALYSES** — 270

Applique Evt analyse

**FIG_4**

FIG_5